# EUROPÄISCHE PATENTSCHRIFT

(11) **EP 2 819 825 B1**
(45) Veröffentlichungstag und Bekanntmachung des Hinweises auf die Patenterteilung: **09.11.2016**
(21) Anmeldenummer: 13708684.9
(22) Anmeldetag: 27.02.2013
(51) Int. Cl.: B29C 45/28, B29C 45/27

(54) **HEISSKANALSYSTEM**
HOT CHANNEL SYSTEM
SYSTÈME DE CANAUX CHAUDS

(30) Priorität: 27.02.2012 DE 102012003574
(43) Veröffentlichungstag der Anmeldung: 07.01.2015
(60) Teilanmeldung: 15177830.5
(73) Patentinhaber: Otto Männer Innovation GmbH, 79353 Bahlingen (DE)
(72) Erfinder: KEITEL, Ralph, F-68600 Algolsheim (FR); SPULLER, Swen, 79362 Forschheim (DE); OLARU, Gheorghe George, 79104 Freiburg (DE); HERDEL, Marco, 79241 Ihringen (DE); FRIDERICH, Raimund, 79361Sasbach (DE)
(74) Vertreter: Dunkel, Christoph
(86) Internationale Anmeldenummer: PCT/EP2013/000572
(87) Internationale Veröffentlichungsnummer: WO 2013/127524

(56) Entgegenhaltungen:
- EP-A2- 1 712 341
- DE-A1-102011 106 606
- US-A- 4 212 627
- US-A1- 2009 100 962
- US-B2- 7 766 646

## Beschreibung

Die Erfindung betrifft ein Heißkanalsystem zum gleichzeitigen Spritzgießen mehrerer Teile in getrennten Formhöhlungen, umfassend
- einen Spritzgieß-Verteiler, der eine Einlassöffnung für Schmelze aufweist,
- mehrere mit dem Verteiler verbundene Heißkanaldüsen, die jeweils eine Ventilnadel aufweisen, zur Steuerung des Schmelzflusses von den Heißkanaldüsen zu den Formhöhlungen,
- eine Trägerplatte oder ein Tragegestell, welche(s) die mehreren Ventilnadeln und/oder mehrere Verstellmittel für die Ventilnadeln trägt, welche Trägerplatte oder welches Tragegestell entlang einer ersten Richtung bewegbar ist, um die Ventilnadeln und/oder Verstellmittel gleichzeitig relativ zu den Formhöhlungen zu bewegen,
- ein Stellmotor zum Verstellen der Trägerplatte oder des Tragegestells und zum Erzeugen einer in Richtung der Formhöhlungen weisenden Schließkraft der Ventilnadeln.

Ein derartiges Heißkanalsystem ist aus US 7 766 646 B2 bekannt. Es weist eine Nadel-Trägerplatte auf, an der mehrere Ventilnadeln angeordnet sind. Die Trägerplatte ist über zwei seitlich voneinander beabstandete Kugelgewindetriebe mit einer Halterung verbunden. Die Kugelumlaufmuttern der Kugelgewindetriebe sind jeweils mit einem Zahnriemenrad verschraubt. Die Zahnriemenräder werden über einen gemeinsamen Zahnriemen von einem Elektromotor angetrieben. Bei dieser Vorrichtung verursachen die Verbindung zwischen dem Elektromotor und dem Zahnriemen und der Zahnriemen Probleme bei der Montage, beim Betrieb der Vorrichtung und bei Wartungsarbeiten.

Aus US 4 497 621, US 6 113 381, US 7 815 431 B2, US 7 866 975 B2 und US 2009/0100692 A1 sind ferner Heißkanalsysteme bekannt, bei denen eine Nadel-Trägerplatte mittels eines Hubmechanismus verstellbar ist, der seitlich an der Trägerplatte verschiebbar gelagerte Führungsstangen mit schräg zur Schieberichtung verlaufende Nockenführungsbahnen aufweist, an denen Nocken angreifen. Wenn die Führungsstangen in eine Schieberichtung verschoben werden, verschieben sich die Nocken entlang Nockenführungsbahnen und die Trägerplatte wird quer zur Schieberichtung verstellt. Beim Verschieben der Führungsstangen treten relativ große Kräfte an den Nockenführungsbahnen und den Nocken auf.

In der US-Patentschrift US 4 212 627 A ist ein Heißkanalsystem entsprechend dem Oberbegriff des Anspruchs 1 beschrieben, mit einem Spritzgieß-Verteiler, mehreren mit dem Verteiler verbundenen Heißkanaldüsen, einer Trägerplatte oder einem Tragegestell, einem Stellmotor zum Verstellen der Trägerplatte oder des Tragegestells, einem außerhalb des Stellmotors angeordneten Schiebemechanismus, einem Eingreif- oder Verbindungsmechanismus und einem Hubmechanismus. Die oben bereits genannte Veröffentlichungsschrift der US-Patentanmeldung US 2009/100962 A1 beschreibt insbesondere in Verbindung mit deren Figuren 1 und 2 ferner einen Stellmotor, der eine Torque-Kraft-Erzeugungsstruktur aufweist, die eine elektrische Komponente, einen mittels der elektrischen Komponente antreibbaren Rotationsmechanismus und einen direkt mit dem Rotationsmechanismus gekoppelten Schubarm aufweist, der in eine zweite Richtung bewegbar ist.

Aufgabe der Erfindung ist es, ein Heißkanalsystem der eingangs genannten Art zu schaffen, das kompakte Abmessungen ermöglicht und bei dem auch eine große Anzahl von beispielsweise bis zu 144 Ventilnadeln genau exakt synchron zueinander werden kann. Dabei soll das Heißkanalsystem ein schnelles und präzises Verstellen der Ventilnadeln ermöglichen.

Diese Aufgabe wird durch ein Heißkanalsystem zum gleichzeitigen Spritzgießen mehrerer Teile in getrennten Formhöhlungen gelöst, welches folgendes umfasst:
- Einen Spritzgieß-Verteiler, der eine Einlassöffnung für Schmelze aufweist,
- mehrere mit dem Verteiler verbundene Heißkanaldüsen, die jeweils eine Ventilnadel aufweisen, zur Steuerung des Schmelzflusses von den Heißkanaldüsen zu den Formhöhlungen,
- eine Trägerplatte oder ein Tragegestell, welche(s) die mehreren Ventilnadel und/oder mehrere Verstellmittel für die Ventilnadeln trägt, welche Trägerplatte oder welches Tragegestell entlang einer ersten Richtung bewegbar ist, um die Ventilnadeln und/oder Verstellmittel gleichzeitig relativ zu den Formhöhlungen zu bewegen,
- ein Stellmotor zum Verstellen der Trägerplatte oder des Tragegestells und zum Erzeugen einer in Richtung der Formhöhlungen weisenden Schließkraft der Ventilnadeln, welcher Stellmotor eine Torque-Kraft-Erzeugungsstruktur umfasst, die eine elektrische Komponente, einen mittels der elektrischen Komponente antreibbaren Rotationsmechanismus und
- einen direkt mit dem Rotationsmechanismus gekoppelten Schubarm aufweist, der in eine zweite Richtung bewegbar ist,
- einen außerhalb des Stellmotors angeordneten Schiebemechanismus, der mit dem Schubarm des Stellmotors gekoppelt ist, wobei der Schiebemechanismus entlang der zweiten Richtung bewegbar und mit einer stationären Platte oder einem stationären Gestell verbunden ist, wobei der Schiebemechanismus biegesteife Komponenten aufweist, um die Schließkraft in die zweite Richtung zu übertragen,
- ein Eingreif- oder Verbindungsmechanismus, der direkt mit dem Schiebemechanismus verbunden ist und mindestens zwei separate Eingreif- oder Verbindungsstrukturen aufweist,
- mehrere Bewegungstransformationseinrichtungen (Drehmechanismen) die jeweils mindestens ein an der stationären Platte oder dem stationären Gestell gelagertes Drehelement umfassen, wobei die Drehelemente mit mindestens zwei Eingreif- oder Verbindungsstrukturen verbunden sind, um die lineare Bewegung des Schiebemechanismus in mehrere gleichzeitige Drehbewegungen umzusetzen, um die Schließkraft in die erste Richtung zu leiten,
- ein Hubmechanismus, befestigt an der Trägerplatte oder dem Tragegestell, wobei der Hubmechanismus direkt mit den Drehelementen gekoppelt ist,
   um die Bewegung der Trägerplatte oder des Tragegestells entlang der ersten Richtung zu bewirken, derart, dass die Kraft zum gleichzeitigen Bewegen der Ventilnadeln und/oder Verstellmittel entlang der ersten Richtung mittels der Trägerplatte oder dem Tragegestell vom Stellmotor erzeugbar und durch die biegesteifen Komponenten des Schiebemechanismus übertragbar ist über eine mit einer Rotation gekoppelte Translationsbewegung, zum Verteilen der Schießkraft auf die mehreren Drehelemente, welche koaxial zu den Ventilnadeln und/oder Verstellmitteln angeordnete Rotationsachsen aufweisen.

In vorteilhafter Weise ist es dadurch möglich, die Trägerplatte an den Bewegungstransformationseinrichtungen mit Abstand vom Rand der Trägerplatte gegen die Halterung abzustützen, so dass auch bei großen Trägerplatten, die eine Vielzahl von Ventilnadeln und/oder Verstellmittel aufweisen, Biegeverformungen der Trägerplatte bei einem schnellen Öffnen und Schließen der Heißkanaldüsen weitestgehend vermieden werden. Somit kann eine große Anzahl von Ventilnadeln mit hoher Dynamik mit nur einem einzigen Stellantrieb synchron zueinander verstellt werden. Da der Schiebemechanismus und die die Schrägflächen aufweisende Bewegungstransformationseinrichtung eine mechanisch stabile bzw. starre Antriebsverbindung zwischen dem Stellantrieb und der Trägerplatte ermöglicht, kann die mittels des Stellantriebs erzeugte Linearbewegung gleichmäßig auf die einzelnen Bewegungstransformationseinrichtung und von diesen auf voneinander beabstandete Stellen der Trägerplatte übertragen werden. Somit wird auch bei einer hochdynamischen Verstellung der Ventilnadeln ein zeitgleiches Öffnen und Schließen sämtlicher Ventilnadeln ermöglicht.

Bei einer vorteilhaften Ausgestaltung der Erfindung ist der Stellmotor derart als Elektromotor ausgestaltet und/oder mittels einer geeigneten Ansteuereinrichtung ansteuerbar, dass die Ventilnadeln in mindestens einer zwischen einer ersten Position und einer zweiten Position angeordnete dritte Position positionierbar sind und in der dritten Position gegebenenfalls gehalten werden können. Die Ventilnadeln können dann bei Bedarf während des Spritzgießprozesses in die mindestens eine dritte Position gebracht werden, um den Schmelzfluss noch besser zu steuern. Die Ventilnadeln können also in einer kontrollierten Weise axial verstellt werden. So können die Heißkanaldüsen beispielsweise in der dritten Position einen relativ kleinen Öffnungsquerschnitt aufweisen, so dass die Schmelze dann mit hoher Fließgeschwindigkeit in die Formhöhlung gespritzt wird, was den Vorteil hat, dass gleichzeitig in der Düsenöffnung eine große Reibungswärme entsteht, die den Fließvorgang begünstigt und aufrecht erhält. Sind die Formhöhlung jedoch nahezu mit Spritzgießmaterial gefüllt und beginnt dieses einerseits zu erstarren und andererseits zu schwinden, kann eine Nachdruckphase eingeleitet werden, bei der die Ventilnadeln zurückgezogen und dadurch der Öffnungsquerschnitt vergrößert wird, so dass trotz der jetzt ungünstigeren Bedingungen Spritzgießmaterial nachgedrückt werden kann.

Bei einer bevorzugten Ausführungsform der Erfindung weisen die Ventilnadeln jeweils an ihrem von der Trägerplatte entfernten freien Endbereich einen zylindrischen Abschnitt auf, der vorzugsweise derart jeweils mit einem dazu passenden Ventilsitz der betreffenden Heißkanaldüse zusammenwirkt, dass diese sowohl in der zweiten Position als auch in der dritten Position der Ventilnadeln geschlossen ist. Die Ventilnadeln können dann vor dem Entformen der Spritzlinge etwas aus ihrer Schließstellung bzw. ihrer Endlage, in der sie in der zweiten Position angeordnet sind, in welcher sie etwas in die Formhöhlung vorstehen, in die dritte Position zurückbewegt werden, um danach die Spritzlinge aus den Formhöhlungen zu entnehmen. Dadurch wird verhindert, dass die Ventilnadeln beim Entformen der Spritzlinge mit diesen in Kontakt geraten und Spuren auf der Oberfläche der Spritzlinge hinterlassen. Außerdem wird durch das Positionieren der Ventilnadeln in den mindestens drei unterschiedlichen Positionen eine saubere Angussstelle ermöglicht.

Bei einer zweckmäßigen Ausgestaltung der Erfindung haben mindestens zwei Heißkanaldüsen in unterschiedliche Richtungen weisende Auslassöffnungen und in unterschiedliche Richtungen weisende Ventilnadeln, wobei diese Ventilnadeln derart mit einem Verstellmittel in Antriebsverbindung stehen, dass die Schließkraft von dem Verstellmittel auf die Ventilnadeln übertragbar ist. Dadurch ist es möglich, mit einem Verstellmittel mehrere Ventilnadeln gleichzeitig zu verstellen. Die Ventilnadeln sind dabei quer und insbesondere rechtwinklig zum Verstellmittel angeordnet. Das Verstellmittel kann stab- oder stiftförmig ausgestaltet sein.

Bei einer vorteilhaften Ausführungsform der Erfindung weist die Hubvorrichtung an der Halterung ein um eine dritte Achse drehbar gelagertes, mit der ersten Schubstange in Antriebsverbindung stehendes drittes Drehelement und ein um eine vierte Achse drehbar gelagertes, mit der zweiten Schubstange in Antriebsverbindung stehendes viertes Drehelement aufweist, dass die dritte und vierte Achse jeweils parallel zur ersten und zweiten Achse beabstandet sind, und dass das dritte Drehelement über eine mindestens eine dritte Schrägfläche aufweisende dritte Bewegungstransformationseinrichtung und das vierte Drehelement über eine mindestens eine vierte Schrägfläche aufweisende vierte Bewegungstransformationseinrichtung mit der Trägerplatte in Antriebsverbindung steht. Die Trägerplatte kann also auch über mindestens vier Spindelantriebe mit der Halterung verbunden sein, wodurch eine noch größere Anzahl von Ventilnadeln zeitgleich verstellt werden kann.

Vorteilhaft ist, wenn die Schubstangen als Zahnstangen und die Drehelemente als damit in Eingriff stehende Zahnräder ausgestaltet sind. Die Stelleinrichtung ermöglicht dann noch kompaktere Abmessungen.

Bei einer anderen vorteilhaften Ausgestaltung der Erfindung sind die einzelnen Drehelemente jeweils an einer von ihrer Achse beabstandeten Stelle über eine quer zur Schieberichtung verlaufende Kulissenführung und/oder ein Schwenklager mit der ihnen jeweils zugeordneten Schubstange verbunden. Die Stelleinrichtung ist dann kostengünstig herstellbar.

Vorteilhaft ist, wenn die Bewegungstransformationseinrichtungen als Kugelgewindetriebe ausgestaltet sind. Die Trägerplatte kann dann reibungsarm verstellt werden. Dies ist insbesondere bei einer großen Trägerplatte von Vorteil, die mit einem einzigen Elektromotor verstellt wird.

Bei einer bevorzugten Ausgestaltung der Erfindung sind die Drehelemente zwischen den Schubstangen angeordnet. Der zwischen den Drehelementen befindliche Raum kann dabei für die Halterung genutzt werden, so dass diese entsprechend stabil ausgestaltet sein kann.

Bevorzugt weisen die einzelnen Kugelgewindetriebe jeweils eine fest mit der Trägerplatte verbundene Kugelumlaufspindel und eine darauf angeordnete Kugelumlaufmutter auf, die um ihre Achse drehbar an der Halterung gelagert und drehfest mit dem ihm zugeordneten Drehelement verbunden ist. Die Trägerplatte kann dann bei der Montage der Stelleinrichtung oder nach der Durchführung von Service- oder Wartungsarbeiten auf einfache Weise an der Halterung montiert werden, indem die Trägerplatte mit ihrer Erstreckungsebene zunächst parallel zur Halterung bzw. normal zu den Achsen der Kugelumlaufspindeln ausgerichtet und dann mit den Kugelumlaufspindeln verschraubt wird.

Zweckmäßigerweise sind an den Kugelumlaufspindeln einerseits und an der Trägerplatte andererseits miteinander zusammenwirkende konische Zentriermittel vorgesehen, wobei die einzelnen Kugelumlaufspindeln jeweils mittels einer Schraube oder Mutter mit der Trägerplatte verschraubt sind. Die Trägerplatte kann dann auf einfache Weise an den Kugelumlaufspindeln montiert werden, indem die miteinander zusammenwirkende Zentriermittel jeweils derart aneinander positioniert werden, dass sie flächig aneinander anliegen. Danach werden die Kugelumlaufspindeln mittels der Schrauben und/oder Muttern mit der Trägerplatte verschraubt, wobei die Schrauben bzw. Muttern bevorzugt mit einem vorbestimmten Drehmoment angezogen werden. Die Zentriermittel sind bevorzugt so ausgestaltet, dass das beim Anziehen der Schrauben bzw. Muttern auf die Kugelumlaufspindeln einwirkende Drehmoment vollständig in die Trägerplatte eingeleitet wird, so dass sich die Kugelumlaufspindeln nicht mit den Schrauben bzw. Muttern mitdrehen können. In vorteilhafter Weise wird außerdem ein beim Betrieb der Stelleinrichtung auf die Kugelumlaufspindeln einwirkendes Drehmoment über die Zentriermittel direkt in die Trägerplatte eingeleitet, so dass sich die Schrauben oder Muttern nicht lösen können.

Bei einer vorteilhaften Ausführungsform der Erfindung weist der Stellantrieb einen Elektromotor mit einem mit der Halterung verbundenen Stator und einem Rotor auf, wobei der Rotor über einen weiteren Kugelgewindetrieb mit dem Schiebemechanismus in Antriebsverbindung steht. Die Drehbewegung des Rotors kann dadurch reibungsarm in die Linearbewegung konvertiert werden. Der Elektromotor kann insbesondere ein Servomotor und bevorzugt ein Torquemotor sein. Bei Bedarf kann der Elektromotor derart ausgestaltet und/oder mittels einer geeigneten Ansteuereinrichtung ansteuerbar sein, dass die Ventilnadeln in mindestens einer zwischen ihrer Offen- und ihrer Schließstellung angeordneten Zwischenposition positionierbar sind.

Bevorzugt weist der Schiebemechanismus einen die erste Schubstange und die zweite Schubstange U-förmig miteinander verbindenden Quersteg auf, wobei der Stellantrieb zum Verstellen des Schiebemechanismus an dem Quersteg angreift. Dadurch ergibt sich ein einfacher und symmetrischer Aufbau, bei dem die Linearbewegung des Stellantriebs gleichmäßig auf die beiden Schubstangen übertragen werden kann.

Erwähnt werden soll noch, dass die Halterung mindestens eine Platte oder einen Rahmen aufweisen kann.

Nachfolgend sind Ausführungsbeispiele der Erfindung anhand der Zeichnungen näher erläutert. Es zeigen:
- Fig. 1: eine perspektivische Darstellung eines ersten Ausführungsbeispiels einer Stelleinrichtung zum Verstellen der Nadelventile einer HeißkanalSpritzgießvorrichtung, wobei nur einige der insgesamt vorhandenen Heißkanaldüsen dargestellt sind,
- Fig. 2: einen Teillängsschnitt durch die Stelleinrichtung, auf dem nur einige der insgesamt vorhandenen Heißkanaldüsen dargestellt sind,
- Fig. 3: einen Teillängsschnitt durch ein Heißkanalsystem, auf dem zwei der insgesamt vorhandenen Heißkanaldüsen dargestellt sind,
- Fig. 4: einen Querschnitt durch die Stelleinrichtung,
- Fig. 5: einen Teilquerschnitt der Stelleinrichtung, der einen Kugelgewindetrieb zeigt,
- Fig. 6: eine perspektivische Teildarstellung der Stelleinrichtung, auf der die Zahnstangen und Kugelgewindetrieben besonders gut erkennbar sind,
- Fig. 7: eine Teilseitenansicht der Stelleinrichtung, auf der eine mit Hilfe von elektrisch angetriebenen Zahnstangen und Kugelgewindetrieben verstellbare Trägerplatte und ein darunter befindlicher Verteiler für Schmelze erkennbar ist,
- Fig. 8: eine Teilaufsicht auf ein zweites Ausführungsbeispiel der Stelleinrichtung, auf der zwei eine Kulissenführung aufweisende Schubstangen erkennbar sind, die drehbar gelagerte Hebel antreiben,
- Fig. 9: eine Teilaufsicht auf ein drittes Ausführungsbeispiel der Stelleinrichtung,
- Fig. 10: eine Teilaufsicht auf ein viertes Ausführungsbeispiel der Stelleinrichtung,
- Fig. 11: eine schematische Darstellung einer Bewegungstransformationseinrichtung, die eine Welle mit einer Schrägflächen aufweisenden Nockenbahn hat,
- Fig. 12: eine Teillängsschnitt durch eine Heißkanaldüse,
- Fig. 13 bis 15: Teillängsschnitte einer weitere Heißkanaldüse, welche den Bereich um die Auslassöffnung der Heißkanaldüse zeigen, wobei die Ventilnadel in unterschiedlichen Positionen dargestellt ist,
- Fig. 16: einen Längsschnitt durch eine weitere Heißkanaldüse eines Heißkanalsystems,
- Fig. 17: einen vergrößerten Ausschnitt der in Fig. 16 gezeigten Heißkanaldüse im Bereich der Auslassöffnung, wobei die Ventilnadel der Heißkanaldüse in einer ersten Position angeordnet ist,
- Fig. 18: eine Darstellung ähnlich Fig. 17, wobei jedoch die Ventilnadel der Heißkanaldüse in einer zweiten Position angeordnet ist, und
- Fig. 19: einen Teillängsschnitt durch ein Heißkanalsystem, das Heißkanaldüsen mit in unterschiedliche Richtungen weisenden Auslassöffnungen hat.

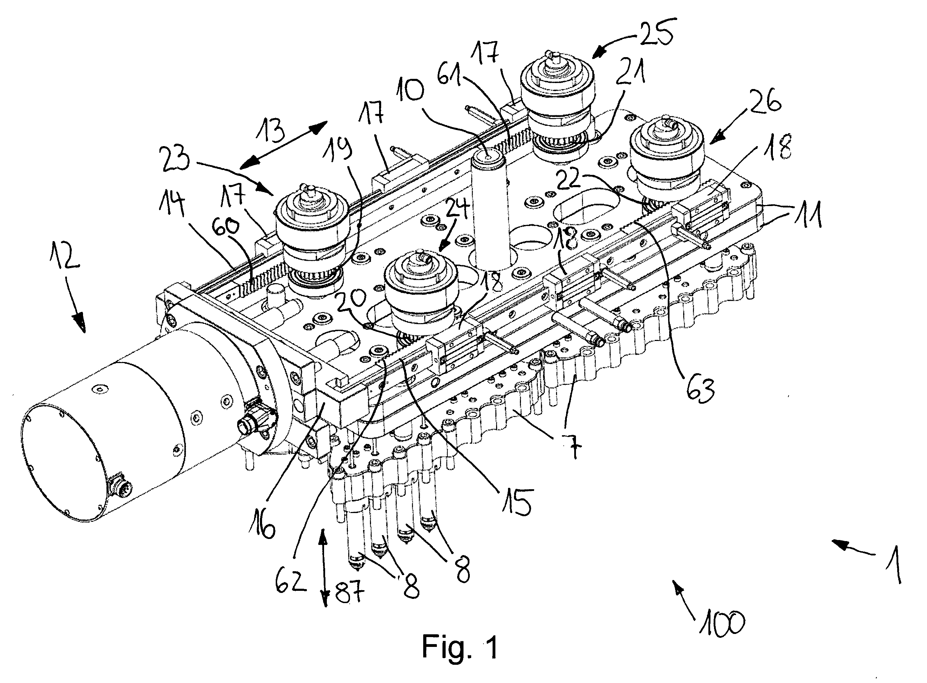

Eine in Fig. 1 im Ganzen mit 1 bezeichnete Stelleinrichtung zum Verstellen von Ventilnadeln 2 eines Heißkanalsystems 100 für eine Heißkanal-Spritzgießvorrichtung weist eine Halterung auf, die einen Plattenstapel mit mehreren plan aufeinanderliegende Halteplatten 3, 4, 5, 6 umfasst.

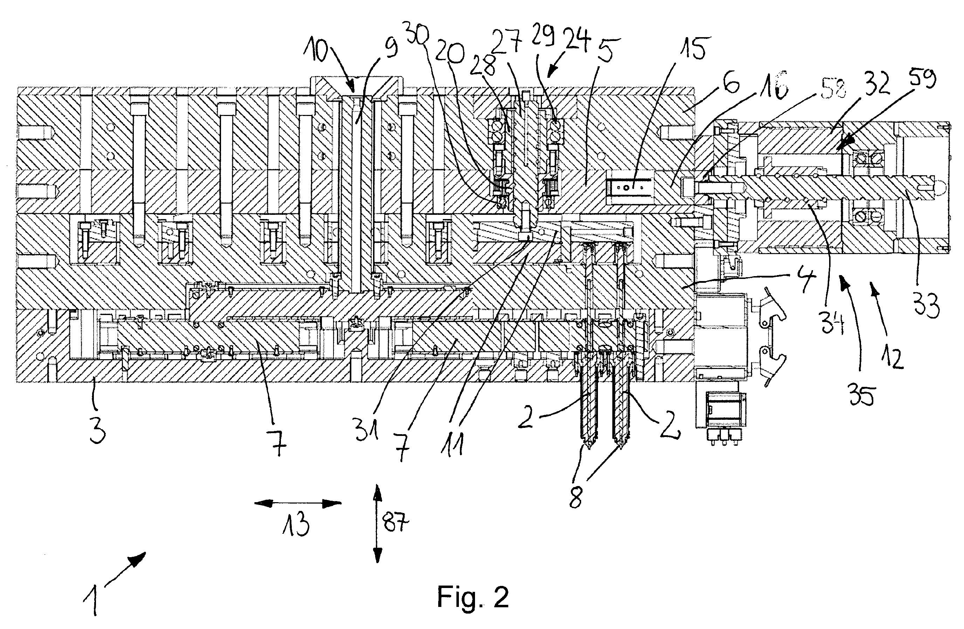

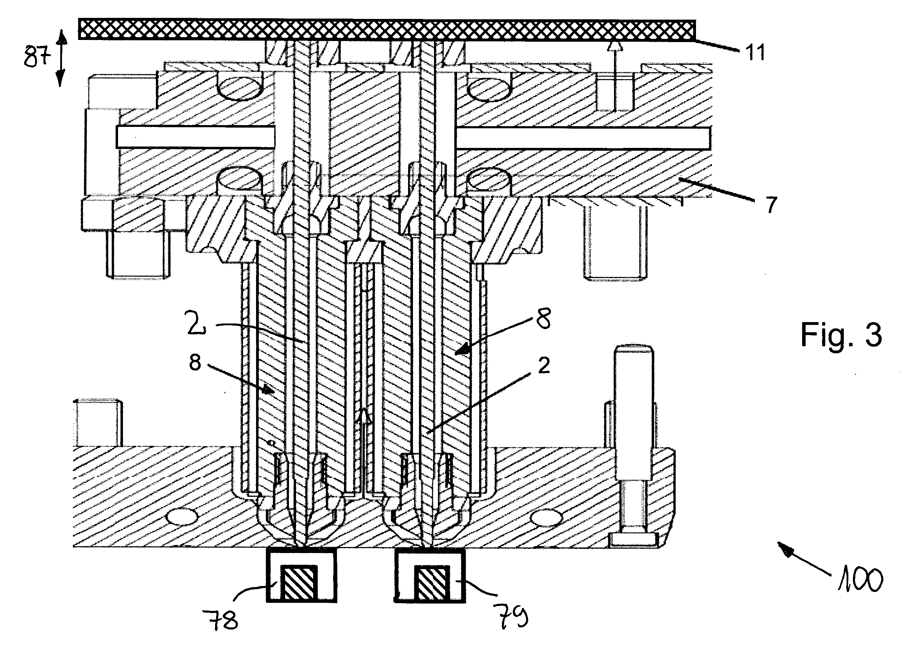

Zwischen einer ersten Halteplatte 3 und einer mit dieser fest verbundenen zweiten Halteplatte 4 ist eine Aussparung vorgesehen, in der ein Verteiler 7 angeordnet ist, der mit mehreren Heißkanaldüsen 8 verbunden ist. Wie in Fig. 2 erkennbar ist, ist der Verteiler 7 über einen Zuführkanal 9 mit einer Einlassöffnung 10 verbunden, an der eine Einspritzdüse einer Spritzgießmaschine anschließbar ist, die eine formbare Schmelze in den Verteiler 7 liefert. Der Verteiler 7 weist in an sich bekannter Weise mit dem Zuführkanal 9 verbundene Kanäle auf, die zu den Heißkanaldüsen 8 führen. Über die Heißkanaldüsen 8 kann die Schmelze in Formhöhlungen 78, 79 einer Spritzgießform eingespritzt werden (Fig. 3). Dabei ist jeder Heißkanaldüse 8 vorzugsweise eine separate Formhöhlung 78, 79 zugeordnet. Die Formhöhlung 78, 79 sind zwischen in eine Offen- und eine Schließstellung bringbaren Formwerkzeugteilen 83, 84 gebildet.

In jeder Heißkanaldüse 8 ist jeweils eine Ventilnadel 2 eines Nadelverschlusses zwischen einer Offen- und einer Schließstellung in Axialrichtung der Heißkanaldüse 8 verschiebbar angeordnet. Mit Hilfe der Ventilnadeln 2 kann die Strömung der Schmelze gesteuert werden.

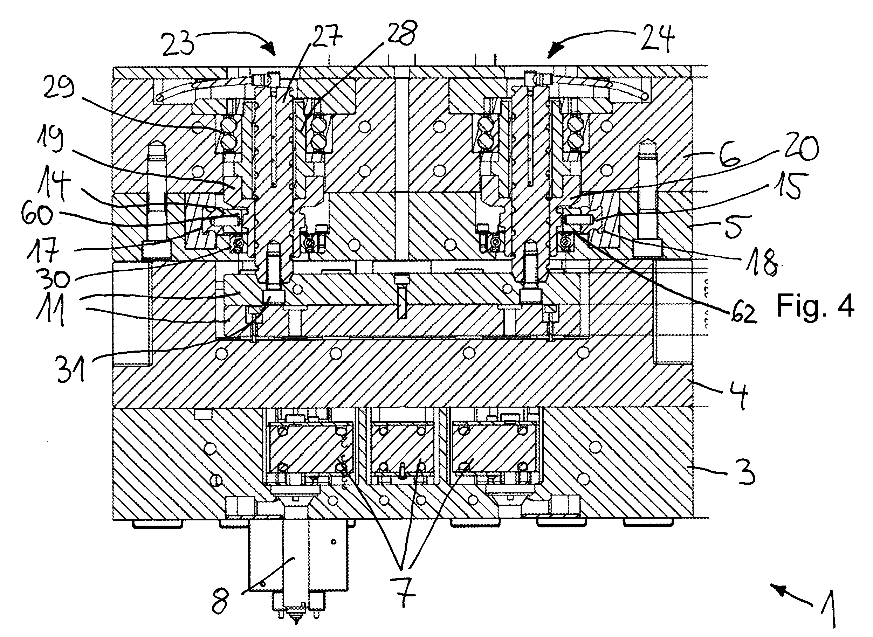

Sämtliche Ventilnadeln 2 sind parallel zueinander beabstandet und jeweils an einem von dem ihnen zugeordneten Ventilsitz 77 entfernten Endbereich mit einer gemeinsamen Trägerplatte 11 verbunden. Die Trägerplatte 11 ist zum zeitgleichen Öffnen und Schließen der Heißkanaldüsen 8 in Axialrichtung der Ventilnadeln 2 relativ zu den Halteplatten 3, 4, 5, 6 der Halterung entlang einer ersten Richtung 87 hin- und her verschiebbar an der Halterung gelagert. In den Fig. 2 und 4 ist die Trägerplatte 11 in ihrer unteren Position dargestellt, in der die Ventilnadeln 2 an den Ventilsitzen 77 anliegen und die Auslassöffnungen 80 der Heißkanaldüsen 8 somit geschlossen sind.

Zum Verstellen der Ventilnadeln 2 zwischen der Offen- und der Schließstellung weist die Stelleinrichtung 1 einen Stellantrieb 12 auf, der ein Stellelement 58 hat, das entsprechend einer Linearbewegung in eine quer zur Axialrichtung der Ventilnadeln 2 orientierte zweiten Richtung 13, die nachstehend auch als Schieberichtung 13 bezeichnet wird, relativ zu den Halteplatten 3, 4, 5, 6 hin und her bewegbar ist.

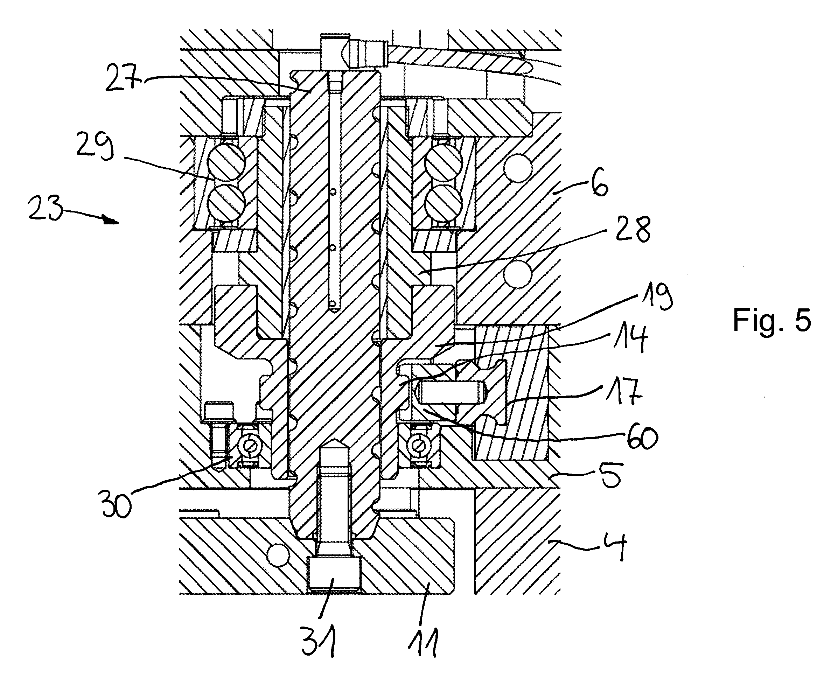

Das Stellelement 58 steht mit einem Schiebemechanismus in Antriebsverbindung, der eine erste Schubstange 14 und eine parallel dazu beabstandete zweite Schubstange 15 aufweist, die an der Halterung in Schieberichtung 13 hin her verschiebbar gelagert sind. In Fig. 5 ist erkennbar, dass eine benachbart zu der zweiten Halteplatte 4 angeordnete dritte Halteplatte 5 für jede Schubstange 14, 15 jeweils eine Schwalbenschwanzführung 17, 18 aufweist, an der die betreffende Schubstange 14, 15 verschiebbar geführt ist. Anstelle der Schwalbenschwanzführungen 17, 18 kann auch eine geeignete andere Linearführung vorgesehene sein, insbesondere eine Kugelumlaufführung oder eine Rundführung. Die Schubstangen 14, 15 sind als biegesteife Elemente ausgestaltet.

Bei dem in Fig. 1, 2 und 3-6 gezeigten Ausführungsbeispiel sind die Schubstangen 14, 15 durch einen biegesteifen Quersteg 16 fest miteinander verbunden. An dem Quersteg 16 greift das Stellelement 58 des Stellantriebs 12 an.

Die Schubstangen 14, 15 stehen über eine Hubvorrichtung mit der Trägerplatte 11 in Antriebsverbindung.

Die Hubvorrichtung hat ein um eine erste Achse drehbar an einer vierten Halteplatte 6 der Halterung gelagertes, mit der ersten Schubstange 14 in Antriebsverbindung stehendes erstes Drehelement 19. Wie in Fig. 1 und 4 erkennbar ist, ist die erste Schubstange 14 als Zahnstange und erste Drehelement 19 als ein damit in Eingriff stehendes Zahnrad ausgestaltet.

In entsprechender Weise hat die Hubvorrichtung ein um eine parallel zur ersten Achse angeordnete zweite Achse drehbar an der vierten Halteplatte 6 gelagertes, mit der zweiten Schubstange 15 in Antriebsverbindung stehendes zweites Drehelement 20. Die zweite Schubstange 15 ist als Zahnstange und das zweite Drehelement 20 als ein damit in Eingriff stehendes Zahnrad ausgestaltet.

Die Hubvorrichtung hat ferner ein um eine parallel zur ersten Achse angeordnete dritte Achse drehbar an der vierten Halteplatte 6 gelagertes, mit der ersten Schubstange 14 in Antriebsverbindung stehendes drittes Drehelement 21, das als mit der ersten Schubstange 14 in Eingriff stehendes Zahnrad ausgestaltet ist.

In entsprechender Weise hat die Hubvorrichtung ein um eine parallel zur ersten Achse angeordnete vierte Achse drehbar an der vierten Halteplatte 6 gelagertes, mit der zweiten Schubstange 15 in Antriebsverbindung stehendes viertes Drehelement 2, das als mit der zweiten Schubstange 15 in Eingriff stehendes Zahnrad ausgestaltet ist.

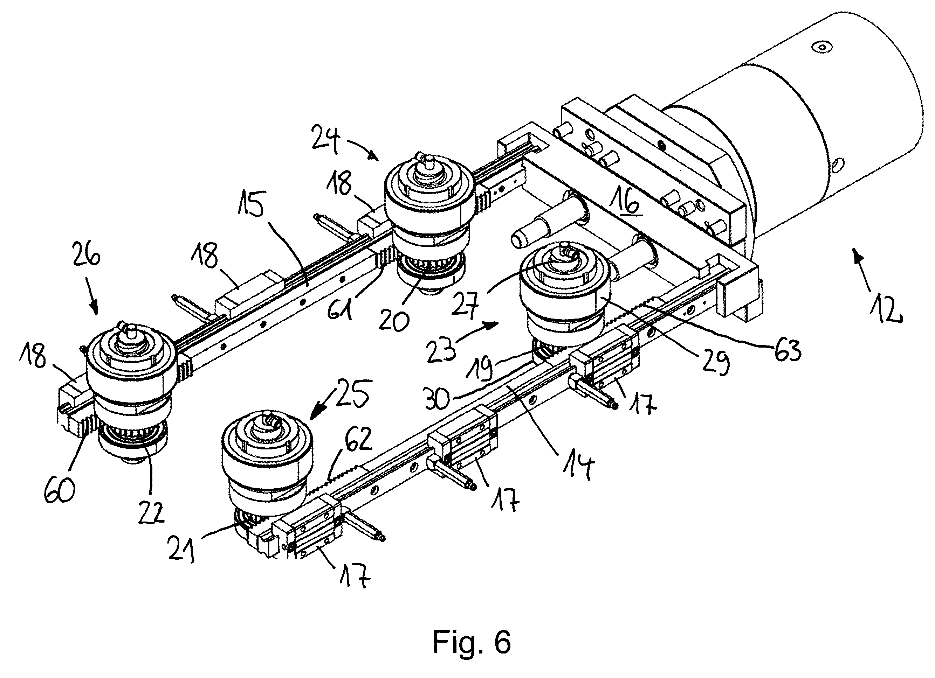

In Fig. 6 ist erkennbar, dass die Drehelemente 19, 20, 21, 22 jeweils zwischen den Schubstangen angeordnet sind. Dabei ist die erste Achse und die vierte Achse sowie die zweite Achse und die dritte Achse punktsymmetrisch bezüglich einer Symmetrieachse angeordnet, die etwa mit der Längsmittelachse des Zuführkanals übereinstimmt.

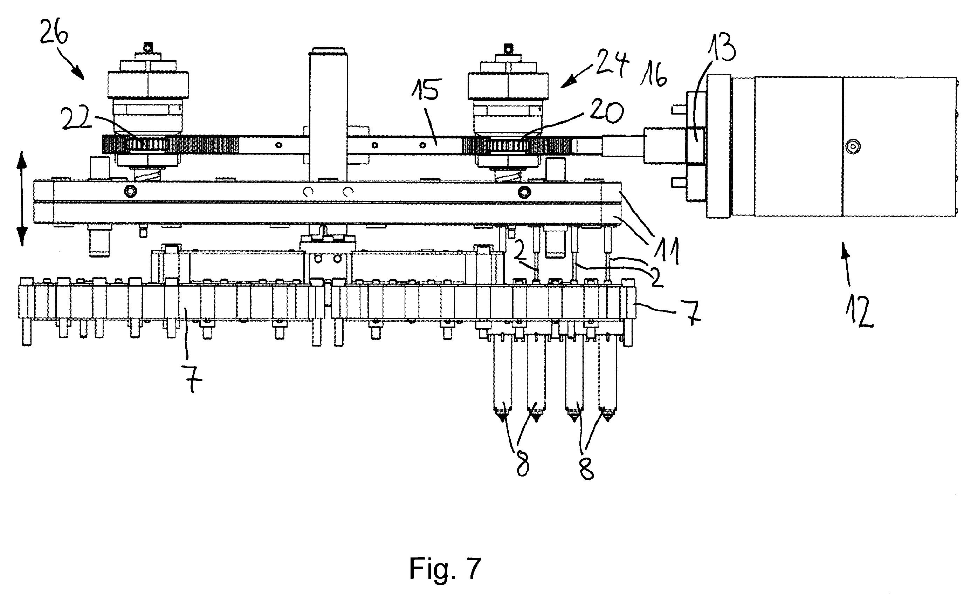

Das erste Drehelement 19 steht über eine erste Bewegungstransformationseinrichtung 23, das zweite Drehelement 20 über eine zweite Bewegungstransformationseinrichtung 24, das dritte Drehelement 21 über eine dritte Bewegungstransformationseinrichtung 25 und das vierte Drehelement 22 über eine vierte Bewegungstransformationseinrichtung 26 mit der Trägerplatte 11 in Antriebsverbindung (Fig. 7). Die Bewegungstransformationseinrichtungen 23, 24, 25, 26 sind jeweils als Kugelgewindetriebe ausgestaltet, welche die translatorische Bewegung der Schubstangen 14, 15 um 90° in Axialrichtung der Ventilnadeln 2 umlenken.

In Fig. 5 ist erkennbar, dass die erste Bewegungstransformationseinrichtung 23 eine fest mit der Trägerplatte 11 verbundene Kugelumlaufspindel 27 und eine darauf angeordnete Kugelumlaufmutter 28 aufweist, die mittels eines ersten Wälzlagers 29 um die erste Achse drehbar an der vierten Halteplatte 6 gelagert ist. Zwischen der Kugelumlaufspindel 27 und der Kugelumlaufmutter 28 sind in der Zeichnung nicht näher dargestellte Lagerkugeln angeordnet, die sich entlang von wendelförmig um die Kugelumlaufspindel 27 umlaufenden Schrägflächen bewegen können, die sich entlang einer geschlossenen Bahnkurve an der Mantelfläche der Kugelumlaufspindel 27 und der Innenwand der Kugelumlaufmutter 28 erstrecken.

Die Kugelumlaufmutter 28 ist drehfest mit dem ersten Drehelement 19 verbunden, das mittels eines zweiten Wälzlagers 30 an der dritten Halteplatte 5 um die erste Achse drehbar gelagert ist.

Der Aufbau der zweiten, dritten und vierten Bewegungstransformationseinrichtungen 24, 25, 26 entspricht dem Aufbau der ersten erste Bewegungstransformationseinrichtung 23, weshalb die dortige Beschreibung für die Bewegungstransformationseinrichtungen 24, 25, 26 entsprechend gilt.

Wenn die Schubstangen 14, 15 mit Hilfe des Stellantriebs in Schieberichtung 13 relativ zu den Halteplatten 3, 4, 5, 6 verschoben werden, verdrehen sich die Drehelemente 19, 20, 21, 22 und die Kugelumlaufmuttern 28 der Bewegungstransformationseinrichtungen 23, 24, 25, 26 um ihre jeweiligen Achsen, wodurch die Kugelumlaufspindeln 27 und die damit fest verbundene Trägerplatte 11 in Axialrichtung der Ventilnadeln 2 relativ zu den Halteplatten 3, 4, 5, 6 und den damit fest verbundenen Ventilsitzen 77 verschoben werden.

In Fig. 5 ist erkennbar, dass an der Kugelumlaufspindel 27 ein Außenkonus und an der Trägerplatte 11 ein dazu passender Innenkonus vorgesehen ist. Die Kugelumlaufspindel 27 ist mittels einer die Trägerplatte 11 zumindest bereichsweise durchsetzenden Schraube 31, die mit einer stirnseitig in die Kugelumlaufspindel 27 eingebrachten Gewindebohrung verschraubt ist, fest mit der Trägerplatte 11 verbunden.

Der Stellantrieb 12 hat einen Elektromotor mit einem mit der Halterung verbundenen Stator 32 und einem in der Zeichnung nicht näher dargestellten Rotor auf, der eine auf einer weiteren Kugelumlaufspindel 33 angeordnete weitere Kugelumlaufmutter 34 einer weiteren Bewegungstransformationseinrichtung 35 antreibt. Diese Kugelumlaufmutter 34 ist axial relativ zum Stator 32 fixiert, so dass sich die Kugelumlaufspindel 33 in Schieberichtung 13 relativ zu Halterung bewegt, wenn die Kugelumlaufmutter 34 von dem Rotor angetrieben wird. Dabei wird die Drehbewegung des Rotors in eine Linearbewegung umgesetzt. Zur Steuerung der Ventilnadeln 2 ist der Elektromotor mit einer in der Zeichnung nicht näher dargestellten elektrischen Ansteuereinrichtung verbunden, welche den Elektromotor derart ansteuert, dass die Ventilnadeln in der Offenstellung in einer vorbestimmten ersten Position und in der Schließstellung in einer vorbestimmten zweiten Positionen positioniert sind.

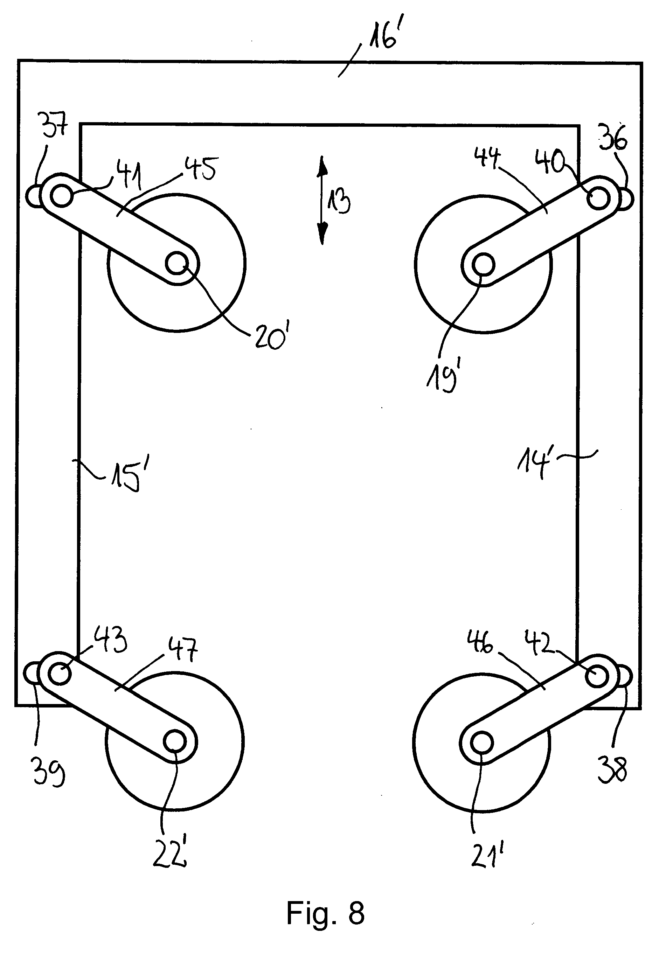

Auch bei dem in Fig. 8 gezeigten Ausführungsbeispiel sind die Schubstangen 14', 15' parallel zueinander angeordnet und durch einen Quersteg 16' etwa U-förmig miteinander verbunden. Mit Hilfe eines in Fig. 8 nicht näher dargestellten Stellantriebs kann der aus den Schubstangen 14', 15' und dem Quersteg 16' gebildete Schiebemechanismus in einer rechtwinklig zur Längserstreckung der Ventilnadeln verlaufenden Schieberichtung 13 relativ zu der Halterung verschoben werden.

Die Umsetzung der translatorischen Bewegung der Schubstangen 14', 15' in die Drehbewegung der Drehelemente 19', 20', 21', 22' erfolgt mittels einer quer zur Schieberichtung 13 verlaufenden Kulissenführung, die an den Schubstangen 14', 15' für jedes von der betreffenden Schubstange 14', 15' angetriebene Drehelement 19', 20', 21', 22' jeweils eine quer zur Schieberichtung 13 verlaufende Führungsnut 36, 37, 38, 39 aufweist, in die ein von der Achse des betreffenden Drehelements 19', 20', 21', 22' beabstandetes Führungselement 40, 41, 42, 43 eingreift, welches jeweils über einen Hebel 44, 45, 46, 47 mit dem Drehelement 19', 20', 21', 22' in Antriebsverbindung steht. Die Drehelemente 19', 20', 21', 22' sind jeweils über Bewegungstransformationseinrichtungen mit der Trägerplatte 11 verbunden. Die Bewegungstransformationseinrichtungen können wie bei dem in Fig. 1, 2 und 3 bis 6 dargestellten Ausführungsbeispiel als Kugelgewindetriebe ausgestaltet sein.

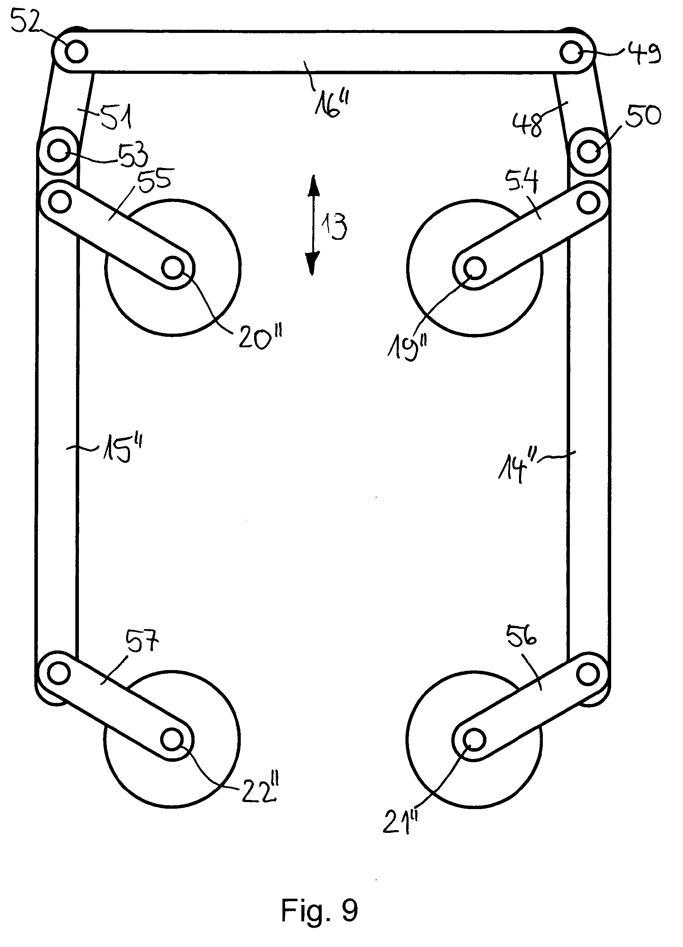

Wie in Fig. 9 erkennbar ist, kann der Quersteg 16" auch jeweils über ein Zwischenelement 48, 49 mit den Schubstangen 14", 15" gelenkig verbunden sein. Dabei ist ein erstes Zwischenelement 48 über ein erstes Gelenk 50 mit dem Quersteg 16" und über ein von der Schwenkachse des ersten Gelenks 50 beabstandetes zweites Gelenk 51 mit der ersten Schubstange 14" verbunden. In entsprechender Weise ist ein zweites Zwischenelement 51 über ein drittes Gelenk 52 mit dem Quersteg 16" und über ein von der Schwenkachse des dritten Gelenks 51 beabstandetes viertes Gelenk 53 mit der zweiten Schubstange 15" verbunden. Die Umsetzung der translatorischen Bewegung der Schubstangen 14", 15" in die Drehbewegung der Drehelemente 19", 20", 21", 22" erfolgt über Verbindungsstangen 54, 55, 56, 57, die jeweils an voneinander beabstandeten Stellen einerseits mit der ihnen zugeordneten Schubstange 14", 15" und andererseits mit dem ihnen zugeordneten Drehelement 19", 20", 21", 22" verbunden sind. Wenn die Schubstangen 14", 15" in Schieberichtung 13 bewegt werden, verändert sich der Abstand zwischen den Schubstangen 14", 15".

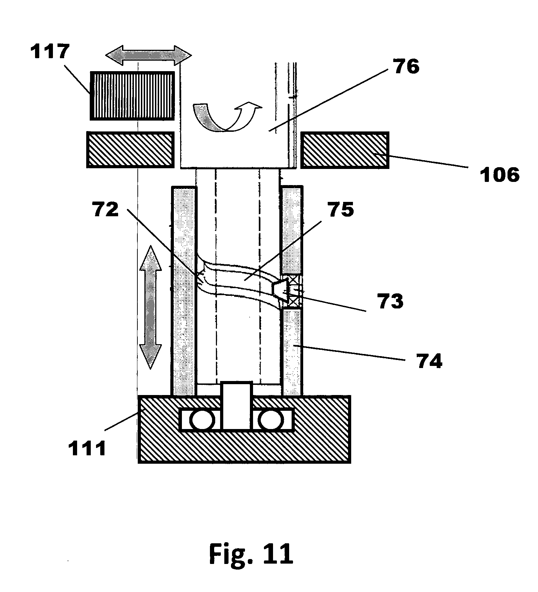

Bei einem in Fig. 11 gezeigten weiteren Ausführungsbeispiel der Erfindung ist der Kugelgewindetrieb durch einen Nockenmechanismus ersetzt. Eine Nut 75 auf einer drehbaren Welle 76 hat geneigte Schrägen 72, die eine Nockenbahn bilden.

Eine kegelstumpfförmige Mitnehmerrolle 73, welche in die Nockenbahn eingreift, ist an der Innenwand einer Mitnehmerhülse 74 drehbar gelagert. Anstelle der kegelstumpfförmigen Mitnehmerrolle 73 kann auch eine zylindrische Mitnehmerrolle 73 vorgesehen sein, die mit komplementären Schrägen der Nockenbahn zusammenwirkt. Die kegelstumpfförmige Mitnehmerrolle 73 verhindert jedoch einen größeren Schlupf zwischen Mitnehmerrolle 73 und Nockenbahn und reduziert dadurch die Reibung.

Bei diesem Ausführungsbeispiel bewirkt die Schiebebewegung des Schiebemechanismus 117 eine Drehung der Welle 76 und die Translationsbewegung der Mitnehmerhülse 74 verursacht eine auf und ab Bewegung der Trägerplatte 11 relativ zu der ortsfesten Halteplatte 106 und den Formhöhlungen 78, 79.

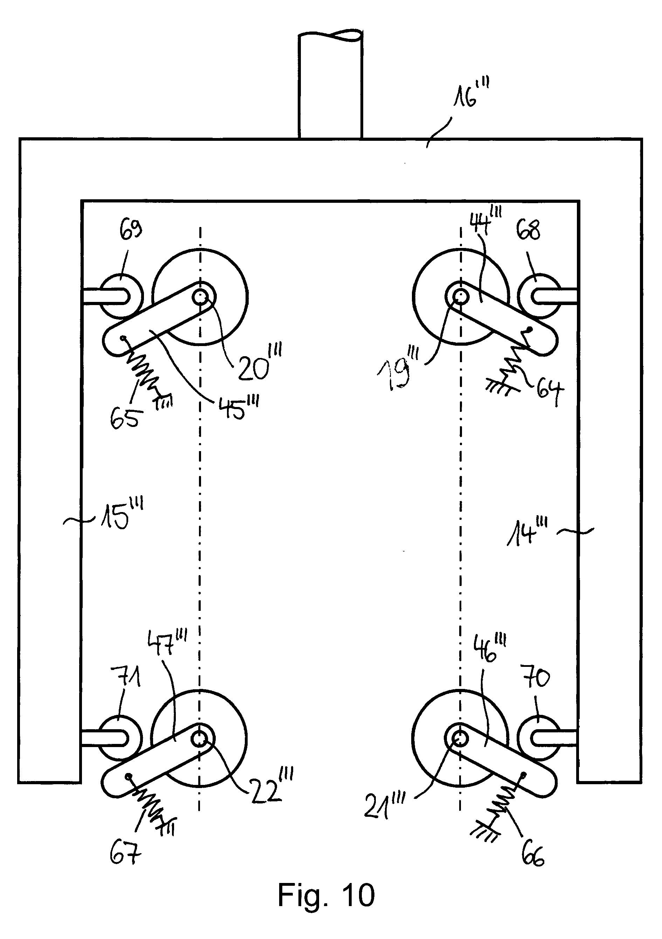

Auch bei dem in Fig. 10 gezeigten Ausführungsbeispiel sind die Schubstangen 14"', 15"' parallel zueinander angeordnet und durch einen Quersteg 16"' etwa U-förmig miteinander verbunden. Mit Hilfe eines in Fig. 10 nicht näher dargestellten Stellantriebs kann der aus den Schubstangen 14"', 15"' und dem Quersteg 16'" gebildete Schiebemechanismus in einer rechtwinklig zur Längserstreckung der Ventilnadeln verlaufenden Schieberichtung 13 relativ zu der Halterung verschoben werden.

Zwischen den Armen 44"', 45"', 46"', 47'" und dem Schiebemechanismus 14"', 15"', 16'" ist jedoch keine direkte Kopplung vorhanden. Die Arme 44"', 45"', 46"', 47'" werden mittels Federelementen 64, 65, 66, 67 kontinuierlich an kleine Rollen 68, 69, 70, 71 angepresst, die an den Schubstangen 14"', 15"' angeordnet sind. Die Federelemente 64, 65, 66, 67 sind jeweils an ihrem einen Ende gegen den betreffenden Arm 44"', 45"', 46"', 47'" und an ihrem anderen Ende gegen eine Widerlagerstelle abgestützt.

Diese Ausgestaltung ist auch für den in Fig. 11 gezeigte Nocken-Rotationsmechanismus geeignet. Dabei kann die Nockenbahn ein Stufenprofil aufweisen, so dass eine kleine Bewegung des Schiebemechanismus 14"', 15"', 16"' dazu genutzt werden kann, um die Trägerplatte 11 um etwa 3 mm - 10 mm zu bewegen und die Ventilnadeln 2 der Heißkanaldüsen 8 zu öffnen. In diesem Fall kann die Trägerplatte 11 ein Rahmen sein, der aus steifen, aber leichten Rohren / Stangen (diese können bei Bedarf extrudiert sein) gebildet ist. Eine derartige, leichte und steife Rahmenstruktur kann leichter von dem in Fig. 11 gezeigten Nocken-Rotationsmechanismus bewegt werden.

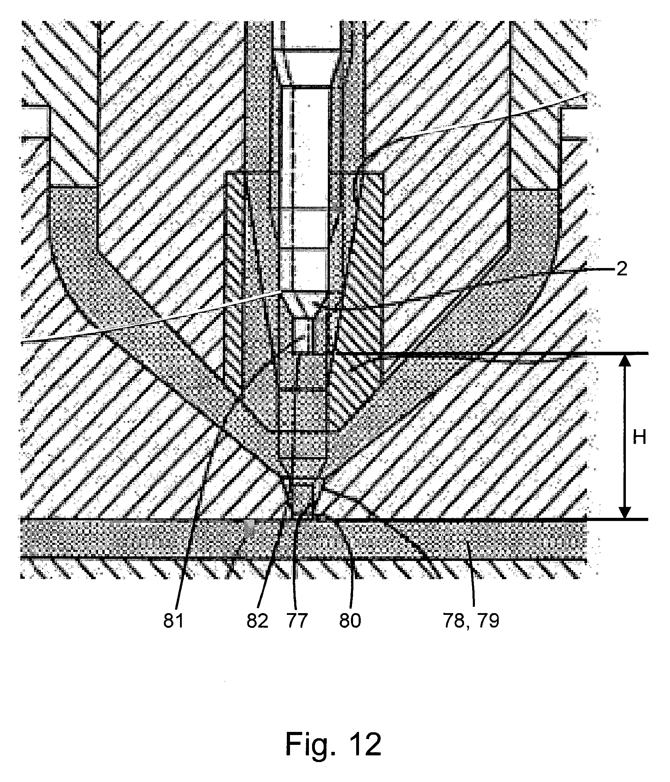

Bei dem in Fig. 12 dargestellten Ausführungsbeispiel weisen die Ventilnadeln 2 an ihrem von der Trägerplatte 11 entfernten freien Endbereich einen zylindrischen Abschnitt 81 auf, der in der Auslassöffnung 80 der Heißkanaldüse 8 positionierbar ist. Mit Hilfe der Stelleinrichtung können die Ventilnadeln 2 zwischen einer in Fig. 12 dargestellten ersten Position, in welcher die Auslassöffnungen 80 bzw. die Heißkanaldüsen 8 vollständig geöffnet sind, und einer zweiten Position, in welcher die Auslassöffnungen 80 bzw. die Heißkanaldüsen 8 vollständig geschlossen sind, verstellt werden. In der zweiten Position sind die Ventilnadeln 2 gegenüber der ersten Position um einen Hub H auf die Formhöhlung 78, 79 zu verschoben. Zwischen der ersten Position und der zweiten Position können die Ventilnadeln 2 in einer oder mehreren Zwischenpositionen kontrolliert positioniert werden.

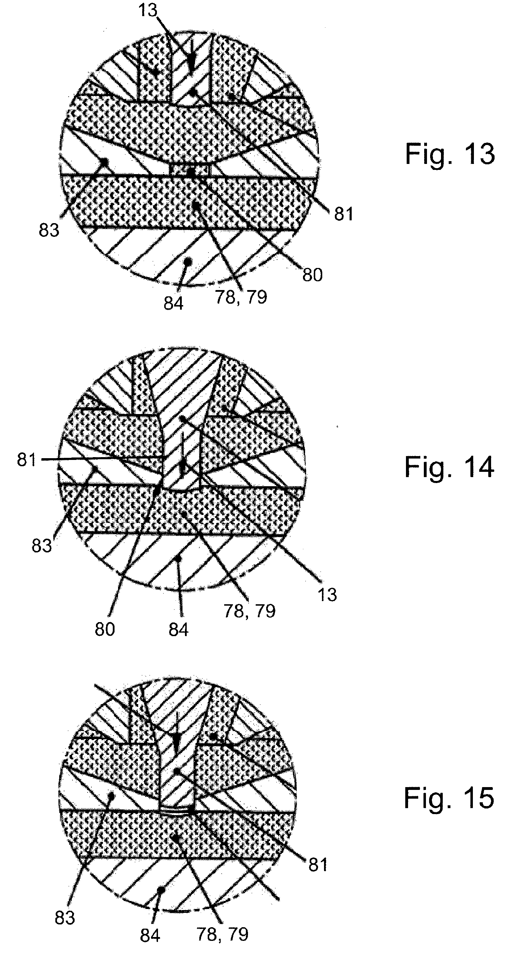

In Fig. 13 ist erkennbar, dass zum Einbringen der Schmelze in die Formhöhlungen 78, 79 die Auslassöffnungen 80 der Heißkanaldüsen 8 zunächst vollständig geöffnet werden, in dem die Ventilnadeln 2 in eine erste Position gebracht werden, in der die freien Enden 82 der Ventilnadeln 2 von den Ventilsitzen 77 beabstandet sind. Sobald die Formhöhlungen 78, 79 vollständig mit Schmelze befüllt sind, werden die Ventilnadeln 2 in eine in Fig. 14 gezeigte zweite Position gebracht, in der die zylindrischen Abschnitte 81 der Ventilnadeln 2 jeweils die ihnen zugeordnete Auslassöffnung 80 verschließen. Dabei durchdringen die Ventilnadeln 2 die Auslassöffnungen 80 und stehen jeweils mit ihren freien Enden 82 etwas über die dazu benachbarte Wandung des Formwerkzeugteils 83 in die Formhöhlung 78, 79 vor. Durch diese Maßnahme ergibt sich am Spritzling eine saubere Angussstelle. Nachdem die in den Formhöhlungen 78, 79 befindliche Schmelze soweit abgekühlt ist, dass die Spritzlinge aus den Formhöhlung 78, 79 entformt werden können, werden die Ventilnadeln 2 etwas zurückgezogen und in eine in Fig. 15 gezeigte dritte Position gebracht, in der die zylindrischen Abschnitte 81 der Ventilnadeln 2 weiterhin Auslassöffnung 80 verschließen, die freien Enden 82 der Ventilnadeln 2 aber nicht mehr in die Formhöhlungen 78, 79 vorstehen. In dieser Ventilnadelposition werden die Formwerkzeugteile 83 in die Offenstellung gebracht und die Spritzlinge werden aus den Formhöhlung 78, 79 entfernt.

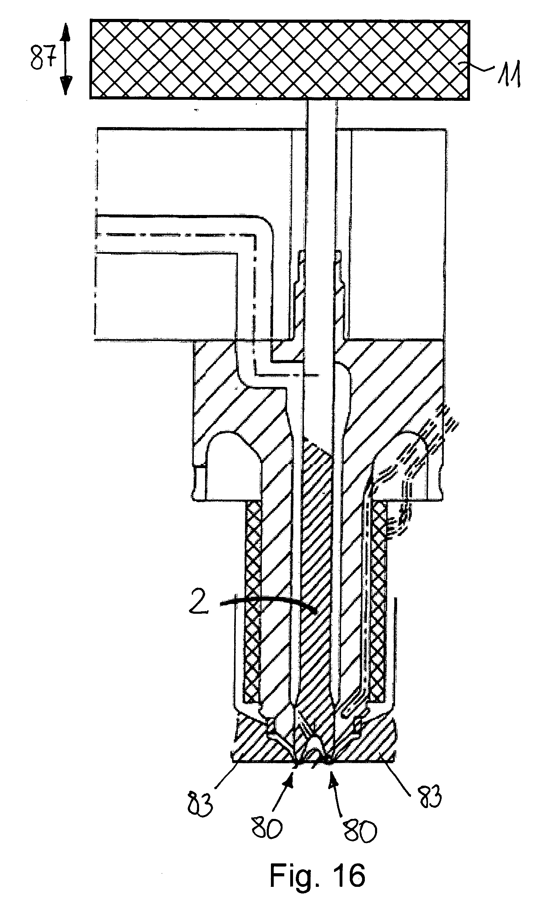

Bei dem in Fig. 16 gezeigten Ausführungsbeispiel sind die Heißkanaldüsen 8 jeweils als offene Spritzgießdüsen mit einer an der Trägerplatte 11 befestigten Ventilnadel 2 ausgestaltet, an deren formseitigem Ende mehrere Nadelspitzen 85, beispielsweise drei in gleichmäßigem Abstand zueinander angeordnet Spitzen vorgesehen sind. Die Nadelspitzen 85 sind konisch ausgebildet und ragen in ebenfalls konische Auslassöffnungen 80, so dass sich in diesen Auslassöffnungen 80 Ringspalte ergeben, durch welche das Spritzgießmaterial in die Formhöhlung 78, 79 eingespritzt werden kann.

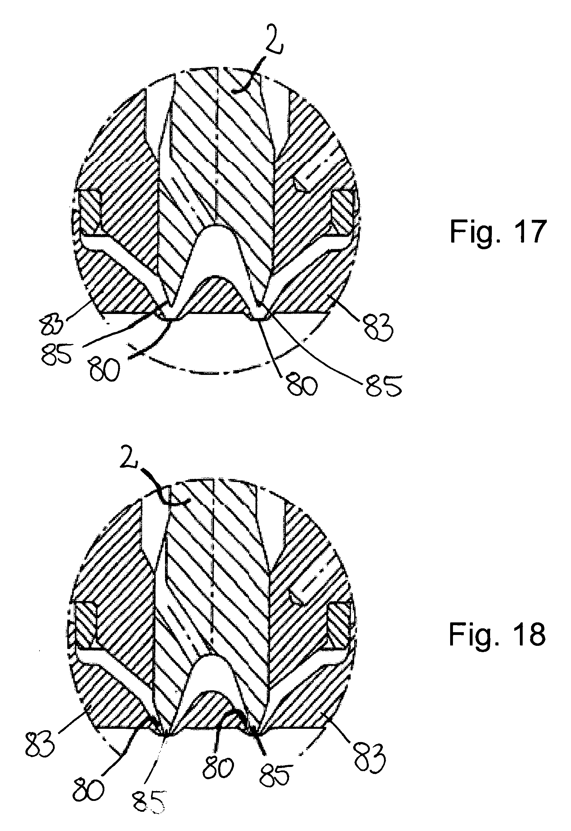

Die Ventilnadeln 2 sind durch Verstellen der Trägerplatte 11 in Richtung ihrer Längserstreckung verstellbar und können zur Reduzierung der Querschnitte im Bereich der Nadelspitzen befindlichen Ringspalte beziehungsweise der dort vorgesehenen Auslassöffnungen 80 aus einer ersten, in Fig. 16 dargestellten Position, in eine zweite, in Fig. 18 dargestellte Position auf die Formhöhlung 78, 79 zu bewegt werden. Beim Zurückziehen der Ventilnadeln 2 von der zweiten in die erste Position gehen die Ringspalte der Auslassöffnungen 80 nach dem Zurückziehen der Ventilnadeln 2 am eigentlichen Eintritt in die Formhöhlung 78, 79 sogar in eine etwa kreisförmige Auslassöffnung 80 über, die erst dann wieder zum Ringspalt wird, wenn die Nadelspitzen wieder auf die zweite Position zu bewegt werden.

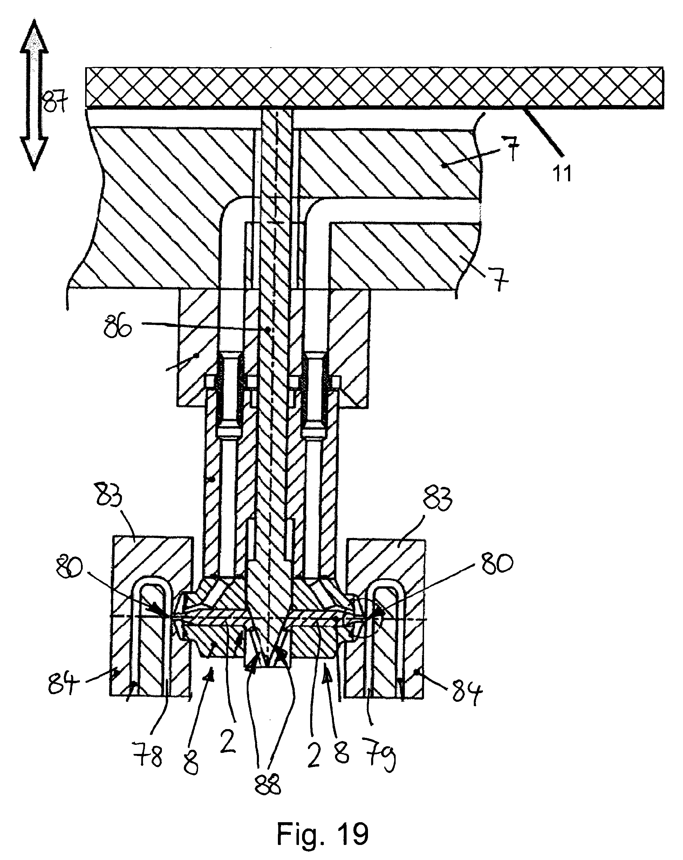

Bei dem in Fig. 19 gezeigten Ausführungsbeispiel hält die Trägerplatte 11 mehrere stabförmige Verstellmittel 86, die sich parallel zueinander und parallel zur ersten Richtung 87 erstrecken. Wie bei den zuvor beschriebenen Ausführungsformen, bei denen die Trägerplatte 11 die Ventilnadeln 2 trägt, ist die Trägerplatte 11 auch bei dem in Fig. 16 gezeigten Ausführungsbeispiel mittels des Stellmotors 12, des Schiebemechanismus 14, 15, 16, des Eingreif- oder Verbindungsmechanismus 60, 61, 62, 63, der Drehmechanismen 23, 24, 25, 26 und des Hubmechanismus 27 in eine erste Richtung 87 relativ zu den Halteplatten 3, 4, 5, 6 entlang der ersten Richtung 87 hin- und her verschiebbar an der Halterung gelagert. Dabei ist die erste Richtung parallel zu den Verstellmitteln 86 angeordnet. Die Ausführungen für die zuvor beschriebenen Ausführungsbeispiele gelten somit für das in Fig. 16 gezeigte Ausführungsbeispiel entsprechend.

Jedem Verstellmittel 86 sind jeweils zwei am Verteiler 7 angeordnete Heißkanaldüsen 8 zugeordnet, die in unterschiedliche Richtungen weisende Auslassöffnungen 80 haben. Wie in Fig. 19 erkennbar ist, weisen die Ventilnadeln 2 dieser Heißkanaldüsen 8 mit ihren freien Enden in zueinander entgegen gesetzte Richtungen. In den Heißkanaldüsen 8 sind die Ventilnadeln 2 auf das Verstellmittel 86 zu und von diesem weg verschiebbar gelagert.

Die Ventilnadeln 2 stehen jeweils derart mit dem ihnen zugeordneten Verstellmittel 86 in Antriebsverbindung, dass die Schließkraft über die Trägerplatte 11 und das Verstellmittel 86 auf die Ventilnadeln 2 übertragbar ist. Das Verstellmittel 86 weist dazu an einem von der Trägerplatte 11 beabstandeten Endbereich für jede ihm zugeordnete Ventilnadeln 2 jeweils eine Schrägfläche 88 auf, an der das von der der betreffenden Ventilnadel 2 zugeordneten Formhöhlung 78, 79 beabstandete Ende dieser Ventilnadel 2 zur Anlage kommt. Wenn sich die Ventilnadeln 2 in ihrer Offenstellung befinden und die Trägerplatte 11 entlang des Doppelpfeils 87 auf die Ventilnadeln 2 zu bewegt wird, werden die Ventilnadeln 2 von dem Verstellmittel 86 verdrängt und jeweils in Richtung ihrer Schließstellung verschoben.

## Patentansprüche

1. Heißkanalsystem (100) zum gleichzeitigen Spritzgießen mehrerer Teile in getrennten Formhöhlungen (78, 79), welches folgendes umfasst:
- Einen Spritzgieß-Verteiler (7), der eine Einlassöffnung (19) für Schmelze aufweist,
- mehrere mit dem Verteiler (7) verbundene Heißkanaldüsen (8), die jeweils eine Ventilnadel (2) aufweisen, zur Steuerung des Schmelzflusses von den Heißkanaldüsen (8) zu den Formhöhlungen (78, 79),
- eine Trägerplatte (11) oder ein Tragegestell, welche(s) die mehreren Ventilnadeln (2) und/ oder mehrere Verstellmittel für die Ventilnadeln (2) trägt, welche Trägerplatte (11) oder welches Tragegestell entlang einer ersten Richtung bewegbar ist, um die Ventilnadeln (2) und/ oder Verstellmittel (86) gleichzeitig relativ zu den Formhöhlungen (78, 79) zu bewegen,
- einen Stellmotor (12) zum Verstellen der Trägerplatte (11) oder des Tragegestells und zum Erzeugen einer in Richtung der Formhöhlungen (78, 79) weisenden Schließkraft der Ventilnadeln (2),
- einen außerhalb des Stellmotors (12) angeordneten Schiebemechanismus (14, 15, 16, 14', 15', 16', 14", 15", 16", 14"', 15"', 16"'), der mit einem Schubarm (33) des Stellmotors (12) gekoppelt ist, wobei der Schiebemechanismus (14, 15, 16, 14', 15', 16', 14", 15", 16", 14"', 15"', 16"') entlang der zweiten Richtung (13) bewegbar und mit einer stationären Platte (5, 6) oder einem stationären Gestell verbunden ist, wobei der Schiebemechanismus (14, 15, 16, 14', 15', 16', 14", 15", 16", 14"', 15"', 16"') biegesteife Komponenten aufweist, um die Schließkraft in die zweite Richtung zu übertragen,
- einen Eingreif- oder Verbindungsmechanismus (60, 61, 62, 63, 40, 41, 42, 43, 54, 55, 56, 57, 68, 69, 70, 71), der direkt mit dem Schiebemechanismus (14, 15, 16, 14', 15', 16', 14", 15", 16", 14"', 15"', 16"') verbunden ist und mindestens zwei separate Eingreif- oder Verbindungsstrukturen (60, 61, 41, 43, 55, 57, 69, 71) aufweist und
- einen Hubmechanismus (27), befestigt an der Trägerplatte (11) oder dem Tragegestell,
**gekennzeichnet durch**
- den Stellmotor (12), der eine Torque-Kraft-Erzeugungsstruktur (59) umfasst, die eine elektrische Komponente (32), einen mittels der elektrischen Komponente (32) antreibbaren Rotationsmechanismus (34) und einen direkt mit dem Rotationsmechanismus (34) gekoppelten Schubarm (33) aufweist, der in eine zweite Richtung (13) bewegbar ist,
- mehrere Bewegungstransformationseinrichtungen (23, 24, 25, 26) die jeweils mindestens ein an der stationären Platte (5, 6) oder dem stationären Gestell gelagertes Drehelement (28, 29, 19', 20', 21', 22', 19", 20", 21", 22", 19"', 20"', 21"', 22") umfassen, wobei die Drehelemente (28, 29, 19', 20', 21', 22', 19", 20", 21", 22", 19"', 20"', 21'", 22") mit mindestens zwei Eingreif- oder Verbindungsstrukturen (60, 61, 62, 63, 40, 41, 42, 43, 54, 55, 56, 57, 68, 69, 70, 71) verbunden sind, um die lineare Bewegung des Schiebemechanismus (14, 15, 16, 14', 15', 16', 14", 15", 16", 14"', 15"', 16"') in mehrere gleichzeitige Drehbewegungen umzusetzen, um die Schließkraft in die erste Richtung zu leiten, und **durch**
- einen Hubmechanismus (27), befestigt an der Trägerplatte (11) oder dem Tragegestell, wobei der Hubmechanismus (27) direkt mit den Drehelementen (28, 29, 19', 20', 21', 22', 19", 20", 21", 22", 19'", 20"', 21"', 22"') gekoppelt ist, um die Bewegung der Trägerplatte (11) oder des Tragegestells entlang der ersten Richtung zu bewirken, derart, dass die Kraft zum gleichzeitigen Bewegen der Ventilnadeln (2) und/ oder Verstellmittel (86) entlang der ersten Richtung mittels der Trägerplatte (11) oder dem Tragegestell vom Stellmotor (12) erzeugbar und **durch** die biegesteifen Komponenten des Schiebemechanismus (14, 15, 16, 14', 15', 16', 14", 15", 16", 14"', 15'", 16"') übertragbar ist über eine mit einer Rotation gekoppelte Translationsbewegung, zum Verteilen der Schießkraft auf die mehreren Drehelemente (28, 29, 19', 20', 21', 22', 19", 20", 21", 22", 19'", 20"', 21"', 22"), welche koaxial zu den Ventilnadeln (2) und/ oder Verstellmitteln (86) angeordnete Rotationsachsen aufweisen.

2. Heißkanalsystem (100) nach Anspruch 1 , wobei der Stellmotor (12) derart als Elektromotor ausgestaltet und/ oder mittels einer geeigneten Ansteuereinrichtung ansteuerbar ist, dass die Ventilnadeln (2) in mindestens einer zwischen einer ersten Position und einer zweiten Position angeordneten dritte Position positionierbar sind und in der dritten Position gegebenenfalls gehalten werden können.

3. Heißkanalsystem (100) nach Anspruch 1 oder 2, wobei die Ventilnadeln (2) jeweils an ihrem von der Trägerplatte (11) entfernten freien Endbereich einen zylindrischen Abschnitt aufweisen, der vorzugsweise derart mit einem dazu passenden Ventilsitz (77) der betreffenden Heißkanaldüse (8) zusammenwirkt, dass diese sowohl in der zweiten Position als auch in der dritten Position der Ventilnadeln (2) geschlossen ist.

4. Heißkanalsystem (100) nach einem der Ansprüche 1 bis 3, wobei die Ventilnadeln (2) in der zweiten Position mit ihren von der Trägerplatte (11) entfernten freien Enden in den Formhöhlungen (78, 79) angeordnet sind und in der dritten Position vollständig außerhalb der Formhöhlungen (78, 79) angeordnet sind.

5. Heißkanalsystem (100) nach einem der Ansprüche 1 bis 4, wobei die Ventilnadeln (2) jeweils an ihrem von der Trägerplatte (11) entfernten freien Endbereich einen sich zum freien Ende der Ventilnadeln (2) hin verjüngenden, vorzugsweise konischen oder kegelförmigen Abschnitt aufweisen.

6. Heißkanalsystem (100) nach einem der Ansprüche 1 bis 5, wobei mindestens zwei Heißkanaldüsen (8) in unterschiedliche Richtungen weisende Auslassöffnungen (80) und in unterschiedliche Richtungen weisende Ventilnadeln (2) haben, wobei diese Ventilnadeln (2) derart mit einem Verstellmittel in Antriebsverbindung stehen, dass die Schließkraft von dem Verstellmittel auf die Ventilnadeln (2) übertragbar ist.

7. Heißkanalsystem (100) nach einem der Ansprüche 1 bis 6, wobei die Bewegungstransformationseinrichtung (23, 24, 25, 26) eine Hülse mit einer wendelförmigen Nockenfolge-Nut und/ oder eine Kugelmutter bzw. eine Kugelumlaufmutter aufweist.

8. Heißkanalsystem (100) nach Anspruch 7, wobei der Hubmechanismus (27) eine Spindel mit einem wendelförmigen Pfad und einen Kugelgewindetrieb aufweist.

9. Heißkanalsystem (100) nach einem der Ansprüche 1 bis 8, wobei der Eingreif- oder Verbindungsmechanismus (60, 61, 62, 63) als Zahnstange ausgestaltet ist.

10. Heißkanalsystem (100) nach einem der Ansprüche 1 bis 9, wobei der Eingreif- oder Verbindungsmechanismus (60, 61, 62, 63) einen Hebelarm (44-47, 54-57, 44"'-47'") aufweist.

## Claims

1. A hot runner system (100) for the simultaneous injection molding of a plurality of parts in separate mold cavities (78, 79), comprising the following:
- an injection molding manifold (7) having an inlet opening (19) for melt,
- a plurality of hot runner nozzles (8) connected to the manifold (7), each having a valve pin (2) for controlling the flow of melt from the hot runner nozzles (8) to the mold cavities (78, 79),
- a support plate (11) or a support frame which supports the plurality of valve pins (2) and/ or plurality of adjusting means for the valve pins (2), said support plate (11) or support frame being movable along a first direction in order to simultaneously move the valve pins (2) and/ or adjusting means (86) relative to the mold cavities (78, 79),
- an actuator (12) for displacing the support plate (11) or support frame and for generating a valve pin (2) closing force in the direction to the mold cavities (78, 79),
- a sliding mechanism (14, 15, 16, 14', 15', 16', 14", 15", 16", 14"', 15"', 16"') arranged external of the actuator (12) coupled to a thrust arm (33) of the actuator (12), wherein the sliding mechanism (14, 15, 16, 14', 15', 16', 14", 15", 16", 14'", 15"', 16'") is movable along the second direction (13) and connected to a stationary plate (5, 6) or a stationary frame, wherein the sliding mechanism (14, 15, 16, 14', 15', 16', 14", 15", 16", 14"', 15'", 16"') comprises rigid components in order to transmit the closing force in the second direction,
- an engaging or connecting mechanism (60, 61, 62, 63, 40, 41, 42, 43, 54, 55, 56, 57, 68, 69, 70, 71) directly connected to the sliding mechanism (14, 15, 16, 14', 15', 16', 14", 15", 16", 14'", 15"', 16"') and comprising at least two separate engaging or connecting structures (60, 61, 41, 43, 55, 57, 69, 71), and
- a reciprocating mechanism (27) attached to the support plate (11) or support frame,
**characterized in**
- said actuator (12) comprising a torque generating structure (59) having an electrical component (32), a rotary mechanism (34) able to be driven by the electrical component (32) and a thrust arm (33) directly coupled to the rotary mechanism (34) and movable in a second direction (13),
- a plurality of movement conversion means (23, 24, 25, 26) each comprising at least one rotary element (28, 29, 19', 20', 21', 22', 19", 20", 21 ", 22", 19"', 20"', 21'", 22'") supported on the stationary plate (5, 6) or stationary frame, wherein the rotary elements (28, 29, 19', 20', 21', 22', 19", 20", 21 ", 22", 19"', 20"', 21'", 22'") are connected to at least two engaging or connecting structures (60, 61, 40, 41, 42, 43, 54, 55, 56, 57, 68, 69, 70, 71) to convert the linear movement of the sliding mechanism (14, 15, 16, 14', 15', 16', 14", 15", 16", 14'", 15"', 16'") into a plurality of simultaneous rotary movements in order to direct the closing force into the first direction, and
- in an reciprocating mechanism (27) attached to the support plate (11) or support frame, wherein the reciprocating mechanism (27) is directly coupled to the rotary elements (28, 29, 19', 20', 21', 22', 19", 20", 21 ", 22", 19"', 20"', 21'", 22'") in order to effect the movement of the support plate (11) or support frame along the first direction such that the force for the simultaneous moving of the valve pins (2) and/ or adjusting means (86) along the first direction by way of the support plate (11) or the support frame able to be generated by the actuator (12) and transmitted by the rigid components of the sliding mechanism (14, 15, 16, 14', 15', 16', 14", 15", 16", 14'", 15"', 16'") is via a translational movement coupled to a rotation to distribute the closing force to the plurality of rotary elements (28, 29, 19', 20', 21', 22', 19", 20", 21", 22", 19'", 20'", 21'", 22'") which have rotational axes coaxial arranged to the valve pins (2) and/ or adjusting means (86).

2. The hot runner system (100) according to claim 1, wherein the actuator (12) is designed as an electric motor and/ or controllable by means of a suitable drive control device such that the valve pins (2) can be positioned in at least one third position disposed between a first position and a second position and can be held as needed in said third position.

3. The hot runner system (100) according to claim 1 or 2, wherein the valve pins (2) comprise a cylindrical section at their respective free end regions distant from the support plate (11) which preferably interacts with a respectively corresponding valve seat (77) of the respective hot runner nozzle (8) such that it is closed in both the second position as well as in the third position of the valve pins (2).

4. The hot runner system (100) according to one of claims 1 to 3, wherein the valve pins (2) are arranged in the mold cavities (78, 79) by their free ends distant the support plate (11) in the second position and are arranged completely external of the mold cavities (78, 79) in the third position.

5. The hot runner system (100) according to one of claims 1 to 4, wherein the valve pins (2) each exhibit a section which tapers, preferably conically or in cone-shaped manner, toward the free end of the valve pins (2) on their free end region distant from the support plate (11).

6. The hot runner system (100) according to one of claims 1 to 5, wherein at least two hot runner nozzles (8) have outlet openings (80) pointing in different directions and valve pins (2) pointing in different directions, wherein said valve pins (2) are in drive connection with an adjusting means such that the closing force is transmittable from the adjusting means to the valve pins (2).

7. The hot runner system (100) according to one of claims 1 to 6, wherein the rotary mechanism (23, 24, 25, 26) comprises a sleeve having a helical cam follower slot and/ or a ball nut or recirculating ball nut respectively.

8. The hot runner system (100) according to claim 7, wherein the reciprocating mechanism (27) comprises a spindle having a helical track and a ball screw.

9. The hot runner system (100) according to one of claims 1 to 8, wherein the engaging or connecting mechanism (60, 61, 62, 63) is configured as a gear rack.

10. The hot runner system (100) according to one of claims 1 to 9, wherein the engaging or connecting mechanism (60, 61, 62, 63) comprises a lever arm (44-47, 54-57, 44"'-47"').

## Revendications

1. Système de canaux chauffés (100) pour la coulée par injection simultanée de plusieurs pièces dans des cavités de moule séparées (78, 79), qui comprend les éléments suivants :
- un répartiteur de coulée par injection (7), qui comporte une ouverture d'entrée (19) pour un matériau en fusion,
- plusieurs tuyères à canaux chauffés (8) reliées au répartiteur (7), qui comportent chacune une aiguille de valve (2) afin de commander le débit de matériau en fusion depuis les tuyères à canaux chauffés (8) vers les cavités de moule (78, 79),
- une plaque porteuse (11) ou un châssis porteur qui porte les plusieurs aiguilles de valve (2) et/ou plusieurs moyens de réglage pour les aiguilles de valve (2), ladite plaque porteuse (11) ou ledit châssis porteur étant déplaçable le long d'une première direction, afin de déplacer les aiguilles de valve (2) et/ou les moyens de réglage (86) simultanément par rapport aux cavités de moule (78, 79),
- un moteur de positionnement (12) pour déplacer la plaque porteuse (11) ou le châssis porteur et pour engendrer une force de fermeture, orientée en direction des cavités de moule (78, 79), sur les aiguilles de valve (2),
- un mécanisme de translation (14, 15, 16, 14', 15', 16', 14", 15", 16", 14'", 15'", 16'") agencé à l'extérieur du moteur de positionnement (12), qui est couplé avec un bras pousseur (33) du moteur de positionnement (12), ledit mécanisme de translation (14, 15, 16, 14', 15', 16', 14", 15", 16", 14'", 15'", 16'") étant déplaçable le long de la seconde direction (13) et relié à une plaque stationnaire (5, 6) ou à un cadre stationnaire, dans lequel le mécanisme de translation (14, 15, 16, 14', 15', 16', 14", 15", 16", 14'", 15"', 16"') comprend des composants rigides vis-à-vis de la flexion afin de transmettre la force de fermeture dans la seconde direction,
- un mécanisme d'engagement ou de liaison (60, 61, 62, 63, 40, 41, 42, 43, 54, 55, 56, 57, 68, 69, 70, 71), qui est relié directement au mécanisme de translation (14, 15, 16, 14', 15', 16', 14", 15", 16", 14'", 15"', 16"') et comprend au moins deux structures d'engagement ou de liaison (60, 61, 41, 43, 55, 57, 68, 71) séparées, et
- un mécanisme de levage (27), fixé sur la plaque porteuse (11) ou sur le châssis porteur,
**caractérisé par**
- le moteur de positionnement (12), qui inclut une structure de génération de couple/force (59), qui comprend un composant électrique, un mécanisme rotatif (34) susceptible d'être entraîné au moyen du composant électrique (32) et un bras pousseur (33) couplé directement avec le mécanisme rotatif (34), qui est déplaçable dans une seconde direction (13),
- plusieurs dispositifs de transformation de mouvement (23, 24, 25, 26), qui incluent chacun au moins un élément rotatif (28, 29, 19', 20', 21', 22', 19", 20", 21", 22", 19'", 20'", 21'", 22"') monté sur la plaque stationnaire (5, 6) ou sur le cadre stationnaire, dans lesquels les éléments rotatifs (28, 29, 19', 20', 21', 22', 19", 20", 21", 22", 19'", 20'", 21"', 22"') sont reliés à au moins deux structures d'engagement ou de liaison (60, 61, 62, 63, 40, 41, 42, 43, 54, 55, 56, 57, 68, 69, 70, 71), pour convertir le mouvement linéaire du mécanisme de translation (14, 15, 16, 14', 15', 16', 14", 15", 16", 14'", 15'", 16"') en plusieurs mouvements de rotation simultanés, afin d'amener la force de fermeture dans la première direction, et par
- un mécanisme de levage (27), fixé sur la plaque porteuse (11) ou sur le châssis porteur, tel que le mécanisme de levage (27) est relié directement aux éléments rotatifs (28, 29, 19', 20', 21', 22', 19", 20", 21", 22", 19'", 20'", 21'", 22'") afin de provoquer le mouvement de la plaque porteuse (11) ou du châssis porteur le long de la première direction, de telle façon que la force pour déplacer simultanément les aiguilles de valve (2) et/ou les moyens de réglage (86) le long de la première direction peut être engendrée au moyen de la plaque porteuse (11) ou du châssis porteur depuis le moteur de positionnement (12), et peut être transmis via les composants rigides vis-à-vis de la flexion du mécanisme de translation (14, 15, 16, 14', 15', 16', 14", 15", 16", 14'", 15"', 16"'), et par l'intermédiaire d'un mouvement de translation couplé à une rotation, pour répartir la force de fermeture vers les plusieurs éléments rotatifs (28, 29, 19', 20', 21', 22', 19", 20", 21", 22", 19'", 20'", 21"', 22"'), qui présentent des axes de rotation agencés coaxialement aux aiguilles de valve (2) et/ou aux moyens de réglage (86).

2. Système à canaux chauffés (100) selon la revendication 1, dans lequel le moteur de positionnement (12) est conçu sous la forme de moteur électrique et/ou susceptible d'être piloté au moyen d'une unité de pilotage appropriée, de telle façon que les aiguilles de valve (2) peuvent être positionnées dans au moins une troisième position agencée entre une première position et une seconde position, et être le cas échéant maintenue dans la troisième position.

3. Système à canaux chauffés (100) selon la revendication 1 ou 2, dans lequel les aiguilles de valve (2) comportent respectivement, au niveau de leurs zones terminales libres éloignées de la plaque porteuse (11), un tronçon cylindrique qui coopère de préférence avec un siège de valve (77) adapté à celui-ci, dans la tuyère de canal chauffé (8) concernée de telle façon que celle-ci est fermée aussi bien dans la seconde position que dans la troisième position des aiguilles de valve (2).

4. Système à canaux chauffés (100) selon l'une des revendications 1 à 3, dans lequel, dans la seconde position, les aiguilles de valve (2) sont agencées avec leurs extrémités libres éloignées de la plaque porteuse (11) dans les cavités de moule (78, 79) et, dans la troisième position, les aiguilles de valve sont agencées entièrement à l'extérieur des cavités de moule (78, 79).

5. Système à canaux chauffés (100) selon l'une des revendications 1 à 4, dans lequel, au niveau de leurs zones terminales libres éloignées de la plaque porteuse (11), les aiguilles de valve (2) comportent un tronçon qui va en se rétrécissant vers l'extrémité libre des aiguilles de valve (2), de préférence conique ou de forme tronconique.

6. Système à canaux chauffés (100) selon l'une des revendications 1 à 5, dans lequel au moins deux tuyères de canaux chauffés (8) possèdent des ouvertures de sortie (80) orientées dans des directions différentes et des aiguilles de valve (2) orientées dans des directions différentes, dans lequel lesdites aiguilles de valve (2) sont en liaison d'entraînement avec un moyen de réglage de telle façon que la force de fermeture est susceptible d'être transmise depuis le moyen de réglage vers les aiguilles de valve (2).

7. Système à canaux chauffés (100) selon l'une des revendications 1 à 6, dans lequel le dispositif de transformation de mouvement (23, 24, 25, 26) comprend une douille avec une gorge de guidage de came en forme de spirale, et/ou un écrou sphérique ou respectivement un écrou à périphérie sphérique.

8. Système à canaux chauffés (100) selon la revendication 7, dans lequel le mécanisme de levage (27) comprend une broche avec un trajet en forme de spirale et un mécanisme à vis à recirculation de billes.

9. Système à canaux chauffés (100) selon l'une des revendications 1 à 8, dans lequel le mécanisme d'engagement ou de liaison (60, 61, 62, 63) est réalisé sous forme de crémaillère.

10. Système à canaux chauffés (100) selon l'une des revendications 1 à 9, dans lequel le mécanisme d'engagement ou de liaison (60, 61, 62, 63) comprend un bras de levier (44-47, 54-57, 44"'-47"').
